# EUROPEAN PATENT APPLICATION

(11) **EP 4 745 195 A1**
(43) Date of publication of application: **20.05.2026**
(21) Application number: 24854470.2
(22) Date of filing: 14.08.2024
(51) Int. Cl.: C08L 83/04, C08K 5/55, C08K 5/092, C08K 5/521, C08K 5/00, C08K 3/22, C08K 3/016, C08G 77/20, C08G 77/12, H01M 10/659

(54) **ENDOTHERMIC PAD**

(30) Priority: 16.08.2023 KR 20230107276; 16.08.2023 KR 20230107279
(71) Applicant: LG Chem, Ltd., Seoul 07336 (KR)
(72) Inventor: BAEK, Si Yeon, Daejeon 34122 (KR); PARK, Hyoung Sook, Daejeon 34122 (KR); YANG, Young Jo, Daejeon 34122 (KR); HAN, Eun Gu, Daejeon 34122 (KR); PARK, Sang Min, Daejeon 34122 (KR); KIM, Hyun Suk, Daejeon 34122 (KR)
(74) Representative: Hoffmann Eitle
(86) International application number: PCT/KR2024/012153
(87) International publication number: WO 2025/037919

(57) **Abstract**

The present application relates to an endothermic pad. The endothermic pad of the present application can exhibit excellent endothermic performance and excellent thermal transfer delay characteristics. Upon a thermal runaway of a battery cell, the endothermic pad can be usefully used to delay thermal transfer to an adjacent battery cell.

## Description

### Technical Field

The present application relates to an endothermic pad. The present application claims the benefit of priority based on Korean Patent Application No. 10-2023-0107276 dated Aug. 16, 2023, and Korean Patent Application No. 10-2023-0107279 dated Aug. 16, 2023, the disclosures of which are incorporated herein by reference in their entirety.

### Background Art

When thermal stability of chemical substances inside cells exceeds its limit, and thus the cells rapidly release internal energy to the outside, thermal runaways of batteries occur. When the measured voltage of the cell drops and the measured temperature (dT/dt≥[4°C/s]) exceeds the maximum operating temperature (about 120°C), it is defined as the thermal runaway, and the causes of thermal runaway include overcharge, collision/drop, heat exposure, high voltage/current exposure, external/internal short circuit, and the like. If the thermal runaway begins, the internal pressure of the battery increases, combustible materials are ejected, whereby ignition occurs. Afterwards, it heats adjacent cells and rapidly spreads into a fire. Battery fires are classified as electrical fires, whereby gas-based fire extinguishing equipment has been applied, but a battery module has a metal protective cover, thereby making it difficult for extinguishing agents to penetrate, and rising to 1000°C in a short period of time upon the thermal runaway, so that the agent must be released at the beginning of the fire. Therefore, to stop the thermal runaway, sufficient cooling, or total loss by fire at the beginning of the fire is the ultimate extinguishment (Prior Art Document 1: Korean Patent Laid-Open Publication No. 10-2020-0107214).

Phase change materials (PCMs) are materials which provide heat and cooling by releasing and absorbing energy through phase transition. Latent heat due to phase transition is higher than general sensible heat. As they are converted from a solid or liquid to another state, they store and release a large amount of energy at a phase change temperature (PCT). The phase change materials are used in fields requiring energy storage and stable temperature, such as heating pads, cooling devices, and clothing.

### Disclosure

### Technical Problem

The present application relates to an endothermic pad. The endothermic pad of the present application can exhibit excellent endothermic performance and excellent thermal transfer delay characteristics. The endothermic pad can be usefully used to delay thermal transfer to an adjacent battery cell upon a thermal runaway of a battery cell.

### Technical Solution

The present application relates to an endothermic pad. The endothermic pad may have a characteristic of absorbing heat generated in the surroundings. The endothermic pad may comprise an endothermic substance. The endothermic pad may further comprise a binder resin. In one example, the endothermic pad may comprise a resin composition including an endothermic substance and a binder resin in a cured state. That is, the endothermic pad may comprise a cured product of the resin composition. The endothermic pad may be the cured product of the resin composition itself. If other layers other than the cured product of the resin composition are further included, it may be called a multilayer endothermic pad.

Among physical properties mentioned in this specification, the physical properties whose measurement temperature and/or measurement pressure affects results are results measured at room temperature and/or normal pressure, unless otherwise specifically stated. In this specification, the term room temperature is a natural temperature without warming or cooling, which is typically a temperature within a range of about 10°C to 30°C, a temperature within a range of 20°C to 30°C, or about 23°C or about 25°C or so. In this specification, the unit of temperature is °C unless otherwise specifically defined. In this specification, the term normal pressure is a natural pressure without pressurization or depressurization, which typically means about 1 atm or so in a level of atmospheric pressure. In this specification, unless otherwise specified, the physical properties whose measurement humidity affects results are physical properties measured at natural humidity without being separately controlled at the room temperature and normal pressure states.

In this specification, the endothermic substance may mean a substance that absorbs or consumes heat generated in the surroundings. The endothermic substance may spontaneously be pyrolyzed, or generate a new substance, using the absorbed heat energy.

The endothermic pad and/or the resin composition may comprise an endothermic substance that irreversibly undergoes an endothermic reaction. The endothermic substance may be a substance that irreversibly reacts when heated and cooled. In one example, the endothermic substance undergoes pyrolysis through endotherm when the surrounding temperature increases, and does not return to the state of the endothermic substance before the pyrolysis even when the surrounding temperature decreases. The pyrolysis may mean that a material is chemically decomposed into a simpler material when heat has been applied thereto. This irreversibility may be advantageous in exhibiting excellent thermal transfer delay characteristics. On the other hand, paraffin, which is a representative phase change material (PCM), absorbs heat to be melted, thereby becoming a liquid state, if the surrounding temperature increases, and releases heat, thereby returning to a solid state, if the surrounding temperature decreases. The phase change material is a material that reacts reversibly through endotherm and exotherm. The resin composition may not comprise any phase change material which reversibly reacts as above.

The endothermic substance exists in a solid state at room temperature, where a phase change from solid to liquid may occur at a temperature of less than 200°C. In this specification, the matter that the phase change from solid to liquid occurs may mean a phenomenon in which water molecules separate (dissociate) from the endothermic substance when the endothermic substance has been heated. The temperature of the endothermic substance at which the phase change from solid to liquid occurs may be specifically 190°C or less, 180°C or less, 170°C or less, 160°C or less, 150°C or less, 140°C or less, 130°C or less, 120°C or less, 110°C or less, or 100°C or less, and may be 50°C or more, 60°C or more, 70°C or more, 80°C or more, 90°C or more, 100°C or more, 110°C or more, 120°C or more, 130°C or more, 140°C or more, 150°C or more, 160°C or more, 170°C or more, 180°C or more, or 190°C or more.

The endothermic substance may be a water-soluble substance. The water-soluble substance may mean a substance having a solubility in water at 20°C of more than 0 g/100ml. In one example, the solubility of the endothermic substance in water at 20°C may be 4.5 g/100ml or more. The solubility of the endothermic substance in water may be specifically 5 g/100ml or more, 10 g/100ml or more, 15 g/100ml or more, 20 g/100ml or more, 25 g/100ml or more, 30 g/100ml or more, 35 g/100ml or more, or 40 g/100ml or more. The upper limit of the solubility of the endothermic substance in water may be, for example, 50 g/100ml or less. The solubility may be derived by measuring the weight of the endothermic substance before resulting in a precipitate while adding the endothermic substance by 1g to 100ml of water at a temperature of 20°C.

The endothermic substance may have thermal conductivity. In one example, the thermal conductivity (λ) of the endothermic substance may be 20 W/mK or less. When the thermal conductivity of the endothermic substance is within the range, it may be advantageous in exhibiting excellent thermal transfer delay characteristics. The thermal conductivity of the endothermic substance may be specifically 15 W/mK or less, 10 W/mK or less, 5 W/mK or less, 4 W/mK or less, 3 W/mK or less, 2 W/mK or less, 1 W/mK or less, or 0.5 W/mK or less. The lower limit of the thermal conductivity of the endothermic substance may be, for example, 0.001 W/mK or more. The thermal conductivity (λ) is a value defined by thermal diffusivity (α) × specific heat (Cp) × density (ρ). The thermal conductivity (λ) may be a value measured at a temperature of 25°C. The thermal conductivity of the endothermic substance may be measured using a known thermal conductivity measuring device. Alternatively, most thermal conductivities of the endothermic substances are known, and endothermic substances satisfying the thermal conductivity may be used.

In one example, the endothermic substance may have an endothermic peak temperature of less than 200°C upon thermal analyses while heating from 0°C to 350°C at a rate of 10°C/min using a differential scanning calorimeter. In this specification, the endothermic peak temperature may mean a temperature at a point exhibiting the highest absolute value of heat flow (W/g) in a graph of heat flow (W/g) (y-axis) versus temperature (°C) (x-axis) obtained through thermal analyses using a differential scanning calorimeter. The endothermic peak temperature may be, for example, 50°C or more. When the endothermic peak temperature is within the range, it may be advantageous for exhibiting excellent thermal transfer delay characteristics. The endothermic peak temperature may be, specifically, 190°C or less, 180°C or less, 170°C or less, 160°C or less, 150°C or less, 140°C or less, 130°C or less, 120°C or less, 110°C or less, or 100°C or less, and may be 60°C or more, 70°C or more, 80°C or more, 90°C or more, 100°C or more, 110°C or more, 120°C or more, 130°C or more, 140°C or more, 150°C or more, 160°C or more, 170°C or more, 180°C or more, or 190°C or more.

In one example, the endothermic substance may have a single endothermic peak (one endothermic peak) at a temperature of less than 200°C. In another example, the endothermic substance may have distributed endothermic peaks (two, or three or more endothermic peaks) at a temperature of less than 200°C. The matter of having two, or three or more endothermic peaks may mean to have one endothermic peak having the highest absolute value of heat flow (W/g) and further one, or two or more endothermic peaks having the next highest absolute value of heat flow (W/g). Under the premise that endothermic amounts are the same, an endothermic substance having a single peak may have better thermal transfer delay characteristics. The endothermic substance having a single peak may be exemplified by, for example, AlCl₃·6H₂O, MgSO₄·7H₂O, NiSO₄·6H₂O, Na₄P₂O₇·10H₂O, Sr(OH)₂·8H₂O, CaSO₄·2H₂O, and the like.

In one example, the endothermic substance may have an endothermic amount of 500 J/g or more. In this specification, the endothermic amount may mean the total heat quantity (integrated value on a DSC graph) from a time point when endotherm starts to a time point when endotherm ends. Specifically, the endothermic amount may be obtained by calculating the area of the graph of the endothermic section in the graph of heat flow (W/g) (y-axis) to the temperature (°C) (x-axis) obtained through thermal analyses using a differential scanning calorimeter (by integrating the graph of the endothermic section). The endothermic section may mean a section from the endothermic initiation temperature to the endothermic end temperature in the graph. The area may mean the area of a closed graphic formed by straight lines (A) connecting a graph point at the endotherm start temperature and a graph point at the endotherm end temperature, and a continuous graph (B) of the section from the endotherm start temperature to the endotherm end temperature. When the endothermic amount at the endotherm peak is within the range, it may be advantageous for exhibiting excellent thermal transfer delay characteristics. The endothermic amount may be, specifically, 600 J/g or more, 700 J/g or more, 800 J/g or more, 900 J/g or more, 1,000 J/g or more, 1,100 J/g or more, 1,200 J/g or more, 1,300 J/g or more, 1,400 J/g or more, 1,500 J/g or more, 1,600 J/g or more, or 1,700 J/g or more, and may be 2,000 J/g or less. The endothermic amount may be a value measured while increasing the temperature at a rate of 10°C/min using a differential scanning calorimeter (DSC Q2000, TA Corporation).

The endothermic substance may comprise a material containing water and/or a solid acid. The material containing water may include hydrate particles and/or water microcapsules. The solid acid may include solid acid particles that exist in a solid state at room temperature, for example, at a temperature of about 25°C.

In one example, the endothermic substance may be hydrate particles. The hydrate particles may mean particles containing water molecules (H₂O). When the hydrate particles are applied as the endothermic substance, water molecules may be dissociated from the endothermic substance by the pyrolysis. This may be advantageous in exhibiting excellent thermal transfer delay characteristics. The hydrate particles may specifically be an inorganic salt containing water molecules bonded to crystals of a metal compound. The water contained in the hydrate particles may be referred to as crystal water. The hydrate particles are different from hydroxide particles, and the hydroxide particles may mean a substance containing -OH (-hydroxyl group) without containing H₂O.

In one example, the endothermic substance may be solid acid particles. The solid acid may include, for example, H₃BO₃ particles.

In one example, the hydrate particles may include one or more types of particles selected from the group consisting of H₃BO₃, (NH₄)₂O·5B₂O₃·8H₂O, (Mg(H₂PO₄)₂)·8H₂O, MgCl₂·6H₂O, AlCl₃·6H₂O, Na₄P₂O₇·10H₂O, KAl(SO₄)₂·12H₂O, NiSO₄·6H₂O, Mg(NO₃)₂·6H₂O, CoSO₄·7H₂O, (NH₄)₂Fe(SO₄)₂·6H₂O, CuSO₄·5H₂O, ZnSO₄·7H₂O, CoCl₂·6H₂O, CrCl₃·6H₂O, NiCl₂·6H₂O, MgSO₄·7H₂O, Al₂(SO₄)₃·18H₂O, Na₂B₄O₇·10H₂O, Sr(OH)₂·8H₂O, CaC₂O₄·H₂O, Ba(OH)₂·8H₂O, Ba(OH)₂·H₂O, Mg₃(PO₄)₂·5H₂O, Mg₃(PO₄)₂·8H₂O, and FeSO₄·7H₂O.

In one example, the endothermic substance may be water microcapsules. The microcapsule may comprise a capsule part and water contained within the capsule part. The capsule part may comprise one or more selected from the group consisting of poly(vinyl alcohol), poly(ethylene oxide), polyethylene glycol, poly(methyl methacrylate), butyl acrylate, and silicate. The size of the microcapsule may be, for example, in a range of 50µm to 500µm.

The content of the endothermic substance may be appropriately selected within a range without impairing the purpose of the present application. In one example, the endothermic substance may be included in a range of 50 parts by weight to 500 parts by weight, relative to 100 parts by weight of the binder resin. The endothermic substance may be included in an amount of 50 parts by weight or more, 100 parts by weight or more, 150 parts by weight or more, 200 parts by weight or more, 250 parts by weight or more, 300 parts by weight or more, 350 parts by weight or more, or 400 parts by weight or more, and may be included in an amount of 500 parts by weight or less, 450 parts by weight or less, 400 parts by weight or less, 350 parts by weight or less, 300 parts by weight or lessor 250 parts by weight or less, relative to 100 parts by weight of the binder resin. It may be suitable for manufacturing the endothermic pad having a content of endothermic particles within the range, and may be advantageous for exhibiting excellent thermal transfer delay characteristics.

The binder resin may comprise a main resin. The main resin may be a silicone resin. When a silicone resin is used as the main resin, it may be advantageous for exhibiting excellent thermal transfer delay characteristics. Particularly, even when an endothermic substance containing water is used as the endothermic substance, it does not change over time or generate water after mixing the main resin and the endothermic substance, so that it may exhibit excellent thermal transfer delay characteristics. Meanwhile, in the case of an organic substance such as a urethane resin or an epoxy resin, it burns in flame, but in the case of the silicone resin, it may have better durability against flame while the Si-O-Si siloxane chain changes to SiO₂ by heat.

The silicone resin may be polydimethylsiloxane having vinyl groups at both terminals. The silicone resin may be a compound represented by Formula 1 below. In Formula 1 below, n may be an integer of 1 or more, and may be appropriately selected in consideration of the molecular weight of the silicone resin.

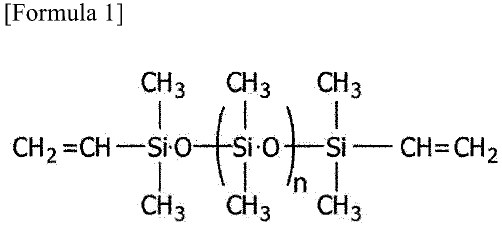

The molecular weight of the silicone resin may be selected within a range without impairing the purpose of the present application. The molecular weight of the silicone resin means a molecular weight of a silicone polymer constituting the silicone resin. In one example, the molecular weight of the silicone resin may be 100,000 g/mol or less. When the molecular weight of the silicone resin is within the range, heat resistance performance is improved, which may be more advantageous in exhibiting excellent thermal transfer delay characteristics. Specifically, the molecular weight of the silicone resin may be 90,000 g/mol or less, 80,000 g/mol or less, 70,000 g/mol or less, 60,000 g/mol or less, 50,000 g/mol or less, 40,000 g/mol or less, 30,000 g/mol or less, 25,000 g/mol or less, 20,000 g/mol or less, 15,000 g/mol or less, or 10,000 g/mol or less. The lower limit of the molecular weight of the silicone resin may be 100 g/mol or more, 500 g/mol or more, or 1,000 g/mol or more in terms of handling the manufactured pad.

The viscosity of the silicone resin may be selected within a range without impairing the purpose of the present application. In one example, the viscosity of the silicone resin may be 150,000 cSt or less. When the viscosity of the silicone resin is within the range, it may be more advantageous in exhibiting excellent thermal transfer delay characteristics. Specifically, the viscosity of the silicone resin may be 100,000 cSt or less, 50,000 cSt or less, 10,000 cSt or less, 5,000 cSt or less, 4,500 cSt or less, 4,000 cSt or less, 3,500 cSt or less, 3,000 cSt or less, 2,500 cSt or less, 2,000 cSt or less, 1,500 cSt or less, or 1,000 cSt or less. The lower limit of the viscosity of the silicone resin may be 5 cSt or more, 10 cSt or more, 20 cSt or more, 40 cSt or more, 60 cSt or more, 80 cSt or more, or 100 cSt or more from the viewpoint of the pad manufacturing process. Regarding the viscosity of the silicone resin, in the case of commercially available products, the seller provides information on the viscosity. Therefore, a silicone resin product satisfying the viscosity may be selected and used, and the viscosity measurement conditions may also follow those provided by the seller of the silicone resin. In one example, the viscosity of the silicone resin may be a value measured using a BROOKFIELD DV-II+ viscometer under conditions of a temperature of 25°C, a rotation speed of 10 rpm, and a spindle of 6.

The binder resin may further comprise a curing agent. As the curing agent, one suitable for curing the main resin may be used. In one example, when the main resin is a silicone resin, a silane compound or a silanol compound may be used as the curing agent. The silane compound may mean a compound having -SiH (silicon-hydride). The silanol compound may mean a compound having -Si-OH (Silicon-hydroxy) group. The -SiH group or -Si-OH group may react with the vinyl group of the silicone resin. The silane compound may be polydimethylsiloxane in which at least one -CH₃ of terminals and/or side chains is substituted with -H. In one example, the curing agent may be a side chain type (pendent type) curing agent. The side chain type curing agent may be polydimethylsiloxane in which at least one -CH₃ of side chains is substituted with -H, and both terminals are -CH₃. In another example, the curing agent may be a hybrid type curing agent. The hybrid type curing agent may be polydimethylsiloxane in which -CH₃ at both terminals is substituted with -H, and at least one -CH₃ of the side chains is also substituted with -H.

In one example, the curing agent may be included in the resin composition so that an H/V ratio is in a range of 1 to 20. The H is a value defined as H mmol/g X H wt%, and V is a value defined as V mmol/g X V wt%. Here, the H mmol/g means mmol of Si-H (silicon-hydrogen) per g of the curing agent included in the resin composition, and the V mmol/g means mmol of Si-Vi (silicon-vinyl) per g of the silicone resin included in the resin composition. Here, the H wt% means a weight fraction of the curing agent to the weight of the entire resin composition, and the V wt% means a weight fraction of the silicone resin to the weight of the entire resin composition. Here, the weight fraction of the entire resin composition is 100 wt%.

The endothermic pad and/or the resin composition may not contain an amine compound and an isocyanate compound. The amine compound and the isocyanate compound may not be suitable for formulation with an endothermic substance containing water. The amine compound may be a curing agent when an epoxy resin is used as the main resin, and the isocyanate compound may be a curing agent when a polyol resin is used as the main resin. According to the present application, the epoxy resin and the polyol resin may not be included as the main resin.

The endothermic pad and/or the resin composition may further comprise a catalyst. The catalyst may promote a reaction between the main resin and the curing agent. In one example, the catalyst may promote a hydrosilylation addition reaction between the carbon-carbon double bonds of the silicone resin and the -SiH groups of the curing agent. In another example, the catalyst may also promote a reaction between the carbon-carbon double bonds of the silicone resin and the -Si-OH groups of the curing agent. In one example, the catalyst may be a platinum group catalyst. The platinum group catalyst may include a platinum-based metal catalyst, a palladium-based metal catalyst, a rhodium-based metal catalyst, or a mixture thereof. In another example, the catalyst may be a metal salt catalyst. The metal salt catalyst may include a tin-based metal salt such as bis(2-ethylhexanoate) tin, and dibutyldilauryltin a zinc-based metal salt such as zinc octoate, an iron-based metal salt such as iron octoate, or a mixture thereof. The catalyst may be included in an amount of 0.01 to 10 parts by weight, 0.01 to 5 parts by weight, 0.01 to 3 parts by weight, 0.01 to 1 part by weight, or 0.01 to 0.5 parts by weight, relative to 100 parts by weight of the binder resin.

The endothermic pad and/or the resin composition may further comprise an additive in addition to the main resin, the curing agent, and the catalyst. In one example, the resin composition may further comprise a dispersant. As the dispersant, for example, an amino-silicone dispersant may be used. The dispersant may be included within a range of 0.1 to 10 parts by weight, 0.1 to 5 parts by weight, or 0.5 to 5 parts by weight, relative to 100 parts by weight of the binder resin.

In one example, the resin composition may further comprise a chain extender. As the chain extender, for example, a compound having -SiH (silicon-hydride) at both terminals may be used. The -SiH may react with the vinyl group of the silicone resin. In one example, the chain extender may be polydimethylsiloxane in which -CH₃ at both terminals is replaced with -H and the side chain is -CH₃. When the resin composition comprises both a curing agent and a chain extender, the curing agent and the chain extender may be included in the resin composition so that the H/V ratio is within the range of 1 to 20. The H is a value defined as (H₁ mmol/g X H₁ wt% + H₂ mmol/g X H₂ wt%), and the V is a value defined as V mmol/g X V wt%. Here, the H₁ mmol/g means mmol of Si-H (silicon-hydrogen) per g of the curing agent included in the resin composition, the H₂ mmol/g means mmol of Si-H (silicon-hydrogen) per g of the chain extender included in the resin composition, and the V mmol/g means mmol of Si-Vi (silicon-vinyl) per g of the silicone resin included in the resin composition. Here, the H₁ wt% means the weight fraction of the curing agent to the weight of the entire resin composition, the H₂ wt% means the weight fraction of the chain extender to the weight of the entire resin composition, and the V wt% means the weight fraction of the silicone resin to the weight of the entire resin composition. Here, the weight fraction of the entire resin composition is 100 wt%.

In one example, the resin composition may further comprise a curing retardant. The curing retardant may be, for example, a compound having a carbon-carbon double bond or a carbon-carbon triple bond. The curing retardant may be one, or two or more selected from the group consisting of 1-ethynyl-1-cyclohexanol, 3-methyl-1-penten-3-ol, 2-methyl-3-butyn-2-ol, 3-phenyl-3-butyn-2-ol, 2-phenyl-3-butyn-2-ol, 3,5-dimethyl-1-hexyn-3-ol, 1,5-hexadiine, 1,6-heptadiine, 3,5-dimethyl-1-hexyne, 2-ethyl-3-butyne, 2-phenyl-3-butyne, 1,3-divinyltetramethyldisiloxane, 1,3,5,7-tetravinyl-1,3,5,7-tetramethylcyclotetrasiloxane, 1,3-divinyl-1,3-diphenyldimethyldisiloxane, 2,4,6,8-tetramethyl-2,4,6,8-tetravinylcyclotetrasiloxane, and divinyl-1,1,3,3-tetramethyldisilazane, but is not limited thereto. The curing retardant may be included within a range of 0.1 to 10 parts by weight, 0.1 to 5 parts by weight, or 0.5 to 5 parts by weight, relative to 100 parts by weight of the binder resin.

In one example, the resin composition may further comprise a flame retardant. The flame retardant may be a solid filler-type flame retardant or a liquid flame retardant. The liquid flame retardant may be suitably used when the amount of filler filled in the resin composition is large, and for example, TEP, TCPP, and the like, which are described below, are representative liquid flame retardants. The flame retardant may include an organic flame retardant, an inorganic flame retardant, and/or an organic-inorganic composite flame retardant. The organic flame retardant may include a phosphorus-based flame retardant and/or a melamine-based flame retardant. The inorganic flame retardant may include a metal hydroxide-based flame retardant. The organic-inorganic composite flame retardant may include a phosphorus-metal-based flame retardant.

In one example, the flame retardant may include one or more selected from the group consisting of a phosphorus-based flame retardant including ammonium polyphosphate (APP), red phosphorus, tris(2-chloroethyl) phosphate (TCEP), isopropylphenyl diphenyl phosphate (IPDP), tris(1-chloro-2-propyl) phosphate (TCPP), triphenyl phosphate (TPP), and triethyl phosphate (TEP); a melamine-based flame retardant including melamine cyanurate; a metal hydroxide-based flame retardant including aluminum hydroxide and magnesium hydroxide; and an organic-inorganic composite flame retardant including aluminum diethyl phosphinate. According to one example of the present application, the flame retardant may include a phosphorus-based flame retardant and a metal hydroxide-based flame retardant.

In one example, a coating layer may also exist on the surface of the flame retardant. The coating layer may be appropriately selected in consideration of functions to be added to the flame retardant. The coating layer may include, for example, one or more selected from the group consisting of a silicone-based coating layer, an epoxy-based coating layer, and a melamine-based coating layer. As one specific example, when the APP flame retardant has the coating layer, it may exhibit better water resistance.

In one example, the flame retardant may be included in a range of 10 to 300 parts by weight, 10 to 200 parts by weight, or 30 to 150 parts by weight, relative to 100 parts by weight of the binder resin.

In one example, the resin composition may further comprise a flame-retardant adjuvant. The flame-retardant adjuvant is an additive that may be added to a resin composition together with a flame retardant to further improve flame retardancy of the resin composition, which may include, for example, PTFE (polytetrafluoroethylene), and the like. When the resin composition further comprises a flame retardant, it may be advantageous in terms of improving the thermal transfer delay time, suppressing crack occurrence due to flame, and reducing a final insulation temperature.

In one example, the viscosity of the resin composition may be 500,000 cps or less. When the viscosity of the resin composition is within the range, it may be advantageous in manufacturing an endothermic pad through curing, and the endothermic pad manufactured therefrom may exhibit excellent thermal transfer delay characteristics. Specifically, the viscosity of the resin composition may be 450,000 cps or less, 400,000 cps or less, 350,000 cps or less, 300,000 cps or less, 250,000 cps or less, 200,000 cps or less, 150,000 cps or less, or 100,000 cps or less. The lower limit of the viscosity of the above resin composition may be 1,000 cps or more, 5,000 cps or more, 10,000 cps or more, 30,000 cps or more, or 50,000 cps or more from the viewpoint of the pad manufacturing process. The viscosity may be a value measured using a Brookfield DV2T HB viscometer under conditions of a temperature of 25°C, a rotation speed of 1.2 rpm, a shear rate (sec⁻¹) of 2.4, and a spindle CPA 52Z.

In one example, the resin composition may be a room-temperature curing resin composition. Therefore, the resin composition may be cured by maintaining it at room temperature (e.g., about 20°C to 30°C), and a separate process for curing, such as application of moisture, application of heat, irradiation of active energy rays (e.g., ultraviolet rays), and the like may not be required. Also, considering that the resin composition may be used as an endothermic pad by comprising an endothermic substance, it may be sensitive to heat that may accompany a phase change of the endothermic substance, so that it may be more advantageous that it is a room-temperature curing type. In addition, in the case of the room-temperature curing resin composition, it may also be advantageous when curing must be performed inside the battery. This is because it may be dangerous when heat is applied to the battery for curing inside the battery. Furthermore, in the case of the room-temperature curing resin composition, it may be advantageous in that the curing speed may be easily adjusted because it may be cured by applying heat when necessary. That is, in the present specification, the room-temperature curing resin composition means that it may be cured even by maintaining it at room temperature, and is not limited to a resin composition that is cured only by maintaining it at room temperature.

The endothermic pad may have a thermal transfer delay effect. In this specification, the thermal transfer delay effect may mean that when a flame has been radiated to a single endothermic pad (a state where no other layer affecting the thermal characteristics of the endothermic pad is laminated), the endothermic pad has a section where the temperature of the endothermic pad does not rise by absorbing heat and is maintained for a certain period. When an endothermic pad having a thermal transfer delay effect is applied to a battery cell, the heat may be effectively delayed from being transferred to an adjacent battery cell, even if the battery cell to which the endothermic pad is applied is ignited. In this specification, when the characteristics of the endothermic pad with respect to a flame are explained, the flame may mean a flame caused by combustion of LPG gas (Liquid Petroleum Gas) or butane gas. The temperature of the flame may be, for example, about 1000°C or more. The upper limit of the flame temperature may be, for example, 2000°C or less, or 1500°C or less.

That the endothermic pad has a thermal transfer delay effect may mean that the endothermic pad has a thermal transfer delay section. The thermal transfer delay section may be defined as a continuous section having a temperature change of less than 10°C, or 5°C or less in a graph of temperature (°C) versus time (second) measured while applying a flame to the endothermic pad. The thermal transfer delay section may be due to an endothermic reaction of the endothermic substance. In one example, in a graph of temperature (°C) versus time (second) measured while applying a flame to the endothermic pad, a thermal transfer delay section may appear after a temperature rise section. In the temperature rise section, the start temperature (temperature at 0 seconds) is about 25°C, where the temperature may increase almost linearly until the start time of the thermal transfer delay section. Thereafter, the temperature may be almost constant in the thermal transfer delay section. After the thermal transfer delay section, the temperature rise section may appear again. If a distinction is necessary, the temperature rise section before the thermal transfer delay section may be referred to as a first temperature rise section, and the temperature rise section after the thermal transfer delay section may be referred to as a second temperature rise section. After the second temperature rise section, it may converge to a constant temperature again, where the temperature at this time may also be referred to as a final adiabatic temperature. The final adiabatic temperature may appear, for example, at a time point of about 3 minutes, about 5 minutes, or about 10 minutes after radiating the flame to the endothermic pad.

In one example, the temperature of the thermal transfer delay of the endothermic pad may be 50°C or more. The temperature of the thermal transfer delay may be, for example, 60°C or more, 70°C or more, 80°C or more, 90°C or more, 100°C or more, 110°C or more, 120°C or more, 130°C or more, 140°C or more, 150°C or more, 160°C or more, 170°C or more, 180°C or more, or 190°C or more. The upper limit of the thermal transfer delay temperature may be, for example, 300°C or less, 260°C or less, 240°C or less, 220°C or less, 200°C or less, 190°C or less, 180°C or less, 170°C or less, 160°C or less, 150°C or less, 140°C or less, 130°C or less, 120°C or less, 110°C or less, or 100°C or less. The above thermal transfer delay temperature may mean some temperatures in the thermal transfer delay section (for example, the start time temperature and/or the end time temperature of the thermal transfer delay section), and may also mean the temperature at the entire time of the thermal transfer delay section. When the thermal transfer delay temperature is within the range, it may be appropriate to delay the initial rapid ignition due to the flame by absorbing the initial heat generation amount in which the battery cell explodes.

In one example, the thermal transfer delay time of the endothermic pad may be, for example, 5 seconds or more. The thermal transfer delay time may be 10 seconds or more, 20 seconds or more, 30 seconds or more, 40 seconds or more, 60 seconds or more, 80 seconds or more, 100 seconds or more, 120 seconds or more, 140 seconds or more, 160 seconds or more, 180 seconds or more, or 200 seconds or more. The longer the thermal transfer delay time, the more advantageous it is, and its upper limit is not particularly limited, but may be, for example, 60 minutes or less.

The endothermic pad may have irreversibility in which its shape is not restored after heating and cooling. In one example, an XRD (X-ray diffraction) pattern of the endothermic pad measured after heating the endothermic pad to 200°C and cooling it to room temperature may be different from an XRD (X-ray diffraction) pattern of the endothermic pad before heating. The heating of the endothermic pad to 200°C may be maintained for about 60 minutes. The endothermic pad before heating means an endothermic pad at room temperature without heating. The room temperature may be, for example, a range of 20°C to 30°C, or about 25°C. If the endothermic pad does not have the irreversibility, the XRD patterns before and after the heating may be the same. Specifically, when an XRD analysis is performed on the endothermic pad, a graph in which the x-axis is 20 (2Theta) and the y-axis is intensity (a. u.) may be obtained (θ is an incident angle of the diffracted x-ray, and intensity is an intensity of the diffracted x-ray). A plurality of diffraction peaks may appear in the graph, and a pattern may be obtained therefrom. That the XRD patterns are different may mean that at least one of the plurality of diffraction peaks does not appear. That the XRD patterns are the same may mean that the plurality of diffraction peaks appears in the same manner.

In one example, the thickness of the endothermic pad may be, for example, 0.5 mm or more. The thickness of the endothermic pad may be specifically 1 mm or more, 1.5 mm or more, 2 mm or more, 2.5 mm or more, or 3 mm or more. When the thickness of the endothermic pad is within the range, it may be advantageous in improving endothermic performance and exhibiting excellent thermal transfer delay characteristics. The upper limit of the thickness of the endothermic pad may be appropriately adjusted in consideration of the battery module to which the pad is to be applied, and may be, for example, 10 mm or less, 9 mm or less, 8 mm or less, 7 mm or less, 6 mm or less, 5 mm or less, 4 mm or less, or 3 mm or less. In one example, the thickness of the pad may be less than 4 mm, 3.5 mm or less, 3.0 mm or less, 2.5 mm or less, or 2.0 mm or less. When the thickness of the pad is within the range, it may be more advantageous in that it may exhibit a secondary temperature delay section.

The present application relates to a use of the resin composition and/or the pad. In one example, the present application relates to a battery module comprising the resin composition and/or the pad. In addition, the present application relates to a battery pack cover comprising the resin composition and/or the pad. The battery module or the battery pack cover may comprise the resin composition in a cured state (i.e., a cured product of the resin composition).

The battery module may comprise a module case and a battery cell. The battery cell may be accommodated in the module case. One or more battery cells may be present in the module case, and a plurality of battery cells may be accommodated in the module case. The number of battery cells accommodated in the module case is adjusted depending on the application, and the like, which is not particularly limited. The battery cells accommodated in the module case may be electrically connected to each other. The type of battery cells accommodated in the module case is also not particularly limited, and various known battery cells may all be applied. In one example, the battery cell may be a pouch type. The pouch type battery cell may typically comprise an electrode assembly, an electrolyte, and a pouch exterior material.

The module case may comprise at least side walls and a bottom plate forming an internal space in which battery cells may be accommodated. In addition, the module case may further comprise an upper plate sealing the internal space. The side walls, the bottom plate, and the upper plate may be formed integrally with each other, or the module case may be formed by assembling the side walls, bottom plate, and/or upper plate, which are each separated. The shape and size of such a module case are not particularly limited, which may be appropriately selected depending on the application, or the shape and number of battery cells accommodated in the internal space, and the like. Here, since there are at least two plates constituting the module case, the terms upper plate and bottom plate are terms having relative concepts used to distinguish them. That is, it does not mean that the upper plate must be present at the top and the bottom plate must be present at the bottom in an actual use state.

The resin composition and/or pad may be present on one lateral surface of the battery cell. When the battery module comprises a plurality of battery cells, the resin composition and/or pad may be disposed between the battery cells. The resin composition and/or pad maintains its original form without state change at the temperature at which the battery operates, and then if the thermal runaway occurs, it can provide a cooling effect to the ignited cell, and delay the transfer of heat to the adjacent cell through state change.

### Advantageous Effects

The endothermic pad of the present application can exhibit excellent endothermic performance and excellent thermal transfer delay characteristics. The endothermic pad can be usefully used to delay thermal transfer to the adjacent battery cell upon the battery cell thermal runaway.

### Mode for Invention

Hereinafter, the present application will be specifically described through examples according to the present application, but the scope of the present application is not limited by the examples presented below.

### Measurement Example 1. Measurement of endothermic peak temperature and endothermic amount

Endothermic peak temperatures and endothermic amounts were measured using a differential scanning calorimeter (DSC Q2000, TA). Specifically, 3mg to 5mg of a sample was placed in a pan and covered with a lid. The pan and lid were a Tzero hermetic type. A hole was drilled in the lid because of pressure due to gas generated upon increasing the temperature. Thereafter, it was stabilized in an isothermal state at 0°C for 3 minutes, and then a DSC thermal analysis was performed while the temperature was increased to 350°C at a rate of 10°C/min. Through the DSC thermal analysis, a graph with temperature (°C) on the x-axis and heat flow (W/g) on the y-axis was obtained, from which the endothermic peak temperature and the endothermic amount were derived.

### Example 1

In a paste mixer (Daehwa Tech, PDM-1K equipment) container, 100 parts by weight of a silicone resin (Andisil VS1000, AB Specialty Silicones) with a molecular weight of 18,000 g/mol as a main resin, 13 parts by weight of a random pendant type silicon-hydride (Andisil XL12, AB Specialty Silicones) as a curing agent, 400 parts by weight of Al₂(SO₄)₃·18H₂O particles (Daejung Chemicals & Metals), and 3 parts by weight of a dispersant (LP X 21879, BYK) were added, and mixed at a revolution of 600 rpm and a rotation of 500 rpm for 2 minutes. After confirming that the uniform mixing was performed, the particles were subjected to primary defoaming, and mixed at a revolution of 600 rpm and a rotation of 200 rpm for 2 minutes. Thereafter, 0.3 parts by weight of a platinum-based catalyst (SRX-212, Dow Chemical) was added and subjected to secondary defoaming to formulate the mixture at a revolution of 600 rpm and a rotation of 200 rpm for 2 minutes, thereby preparing a resin composition. The endothermic peak temperature of Al₂(SO₄)₃·18H₂O is 103°C, and the endothermic amount is 740 J/g.

A frame-shaped silicone dam (the overall size of the dam is width X length = 12cm X 12cm, the size inside the dam is width X length = 10cm X 10cm, and the height of the dam is 2 mm) was prepared on a fluorine release coating paper. The resin composition was applied inside the silicone dam, and then covered with a fluorine release coating paper. After pressing the fluorine release coating paper with a glass plate, it was left at room temperature (25°C) for 24 hours and cured, thereby manufacturing a pad with a uniform thickness (2mm).

### Example 2

A resin composition was prepared in the same manner as in Example 1, except that 300 parts by weight of MgSO₄·7H₂O particles (Daejung Chemicals & Metals) were formulated instead of Al₂(SO₄)₃·18H₂O particles (Daejung Chemicals & Metals). Thereafter, a pad was manufactured in the same manner as in Example 1. The endothermic peak temperature of MgSO₄·7H₂O is 94°C, and the endothermic amount is 1150 J/g.

### Example 3

A resin composition was prepared in the same manner as in Example 1, except that 250 parts by weight of AlCl₃·6H₂O particles (Daejung Chemicals & Metals) were formulated instead of Al₂(SO₄)₃·18H₂O particles (Daejung Chemicals & Metals). Thereafter, a pad was manufactured in the same manner as in Example 1. The endothermic peak temperature of AlCl₃·6H₂O is 186°C, and the endothermic amount is 1750 J/g.

### Example 4

A resin composition was prepared in the same manner as in Example 1, except that 250 parts by weight of H₃BO₃ particles (Daejung Chemicals & Metals) were formulated instead of Al₂(SO₄)₃·18H₂O particles (Daejung Chemicals & Metals). Thereafter, a pad was manufactured in the same manner as in Example 1. The endothermic peak temperature of H₃BO₃ is 136°C, and the endothermic amount is 1133 J/g.

### Comparative Example 1

A resin composition was prepared in the same manner as in Example 1, except that 200 parts by weight of xylitol particles (Daejung Chemicals & Metals) were formulated instead of Al₂(SO₄)₃·18H₂O particles (Daejung Chemicals & Metals). Thereafter, a pad was manufactured in the same manner as in Example 1. The endothermic peak temperature of xylitol is 94°C, and the endothermic amount is 250 J/g.

### Comparative Example 2

A resin composition was prepared in the same manner as in Example 1, except that 200 parts by weight of zinc hydroxystannate particles (Shinseung Hichem) were added instead of Al₂(SO₄)₃·18H₂O particles (Daejung Chemicals & Metals). Thereafter, a pad was manufactured in the same manner as in Example 1. The endothermic peak temperature of zinc hydroxystannate is 250°C, and the endothermic amount is 350 J/g.

### Comparative Example 3

A resin composition was prepared in the same manner as in Example 1, except that 300 parts by weight of Al(OH)₃ particles (Chalco Qingdao) were formulated instead of Al₂(SO₄)₃·18H₂O particles (Daejung Chemicals & Metals). Thereafter, a pad was manufactured in the same manner as in Example 1. The endothermic peak temperature of Al(OH)₃ is 298°C, and the endothermic amount is 1100 J/g.

### Evaluation Example 1. Evaluation of thermal transfer delay characteristics

The pads finally manufactured in Examples and Comparative Examples were cut into width X length = 6cm X 6cm and prepared as samples. SUS frames were attached to the front and back of the sample. The SUS frame is a frame with a total size of width X length = 6cm×6cm, and a hole of width X length = 5cm×5cm, so that the area where the flame really contacts the pad is width X length = 5cm×5cm. The SUS frame serves to prevent the sample from being bent by the flame. The pad with the SUS frames attached was fixed vertically to a jig with a clamp (the main surface of the pad is perpendicular to the ground, and the thickness direction of the pad is horizontal to the ground). A butane gas torch (butane gas: Sun Lighter Gas 295ML, TAEYANG, gas torch: 500JET, Honest) was disposed on the first main surface side of the pad, and a thermal imaging camera (A655SC, FLIR) was disposed on the second surface side opposite to the first main surface of the pad. The pixel resolution of the thermal imaging camera is 640 X 480, and the upper limit of the measured temperature is 660°C. The gas torch was disposed so that the portion where the flame thereof was radiated was positioned at the center of the first main surface of the pad, and the thermal imaging camera was disposed so that the lens thereof was positioned at the center of the second main surface of the pad. In addition, the distance between the first main surface of the pad and the portion where the flame of the gas torch was radiated was about 3 cm, and the distance between the second main surface of the pad and the lens of the thermal imaging camera was 40 cm. The ambient temperature before the flame was radiated from the gas torch was about 25°C. The temperature of the second main surface of the pad over time was measured with the thermal imaging camera while the pad was heated by radiating the flame from the torch. The thermal imaging camera measures the infrared radiation heat emitted by the pad and calculates the temperature based on the measured infrared radiation heat value. The time for radiating the flame by the gas torch was set to 3 minutes. The temperature measured from the thermal imaging camera is the temperature at the highest temperature point in the heated part of the pad.

In the case where the pad absorbed heat for the temperature to be maintained for a certain period without increasing when the flame was applied to the pad as above, it was evaluated to have a thermal transfer delay effect. Specifically, in the temperature (°C) graph of the pad versus the measured time (seconds) when the flame was applied to the pad, a continuous section in which the temperature change was 5°C or less could be defined as a thermal transfer delay section, and the temperature at the end point of the thermal transfer delay section was defined as the thermal transfer delay temperature, and the time for which the thermal transfer delay section was maintained was defined as the thermal transfer delay time, whereby they were described in Table 1 below.

**[Table 1]**

| | | Endothermic substance | Endothermic peak temperature (°C) | Endothermic amount (J/g) | Thermal transfer delay temperature | Thermal transfer delay time |
|---|---|---|---|---|---|---|
| Example | 1 | Al₂(SO₄)₃·18H₂O | 103 | 740 | 100°C | 130sec |
| | 2 | MgSO₄·7H₂O | 94 | 1150 | 100°C | 70sec |
| | 3 | AlCl₃·6H₂O | 186 | 1750 | 190°C | 200sec |
| | 4 | H₃BO₃ | 136 | 1133 | 140°C | 100sec |
| Comparative Example | 1 | Xylitol | 94 | 250 | 95°C | 15sec |
| | 2 | Zinc hydroxystannate | 250 | 350 | 195°C | 20sec |
| | 3 | Al(OH)₃ | 298 | 1100 | 310°C | 50sec |

## Claims

1. An endothermic pad comprising a cured product of a resin composition comprising an endothermic substance and a binder resin, wherein the endothermic substance has an endothermic amount of 500 J/g or more and an endothermic peak temperature of less than 200°C when the endothermic amount is measured while increasing a temperature from 0°C to 350°C at a rate of 10°C/min using a differential scanning calorimeter.

2. The endothermic pad according to claim 1, wherein the endothermic substance comprises a substance which exists in a solid state at room temperature and undergoes a phase change from solid to liquid at a temperature of less than 200°C.

3. The endothermic pad according to claim 1, wherein the endothermic substance comprises one or more selected from the group consisting of H₃BO₃, (NH₄)₂O·5B₂O₃·8H₂O, (Mg(H₂PO₄)₂)·8H₂O, MgCl₂·6H₂O, AlCl₃·6H₂O, Na₄P₂O₇·10H₂O, KAl(SO₄)₂·12H₂O, NiSO₄·6H₂O, Mg(NO₃)₂·6H₂O, CoSO₄·7H₂O, (NH₄)₂Fe(SO₄)₂·6H₂O, CuSO₄·5H₂O, ZnSO₄·7H₂O, CoCl₂·6H₂O, CrCl₃·6H₂O, NiCl₂·6H₂O, MgSO₄·7H₂O, Al₂(SO₄)₃·18H₂O, Na₂B₄O₇·10H₂O, Sr(OH)₂·8H₂O, CaC₂O₄·H₂O, Ba(OH)₂·8H₂O, Ba(OH)₂·H₂O, Mg₃(PO₄)₂·5H₂O, Mg₃(PO₄)₂·8H₂O, and FeSO₄·7H₂O.

4. The endothermic pad according to claim 1, wherein the endothermic substance has an endothermic peak temperature of 50°C or more.

5. The endothermic pad according to claim 1, wherein the endothermic substance has an endothermic amount of 2,000 J/g or less.

6. The endothermic pad according to claim 1, wherein the binder resin comprises a silicone resin as a main resin.

7. The endothermic pad according to claim 6, wherein the binder resin further comprises a curing agent.

8. The endothermic pad according to claim 1, wherein the endothermic substance is included in a range of 50 to 500 parts by weight relative to 100 parts by weight of the binder resin.

9. The endothermic pad according to claim 1, wherein the endothermic pad has a thickness in a range of 1 mm to 10 mm.

10. The endothermic pad according to claim 1, wherein the endothermic pad has a thermal transfer delay temperature in a range of 50°C to 200°C, and a thermal transfer delay time of 30 seconds or more.
